# EUROPÄISCHE PATENTSCHRIFT

(11) **EP 1 194 929 B1**
(45) Veröffentlichungstag und Bekanntmachung des Hinweises auf die Patenterteilung: **02.01.2004**
(21) Anmeldenummer: 00901015.8
(22) Anmeldetag: 31.01.2000
(51) Int. Cl.: G11B 17/04

(54) **SCHUBLADE FÜR EIN CD-LAUFWERK**
DRAWER FOR A CD DRIVE
TIROIR POUR UN LECTEUR DE CD

(30) Priorität: 09.07.1999 CH 126199
(43) Veröffentlichungstag der Anmeldung: 10.04.2002
(73) Patentinhaber: Al-Askari, Raad, Abu Dhabi (AE)
(72) Erfinder: Al-Askari, Raad, Abu Dhabi (AE)
(74) Vertreter: Patentanwälte Feldmann & Partner AG
(86) Internationale Anmeldenummer: PCT/CH2000/000042
(87) Internationale Veröffentlichungsnummer: WO 2001/004890

(56) Entgegenhaltungen:
- EP-A- 0 375 988
- EP-A- 0 576 253
- EP-A- 0 609 617
- EP-A- 0 927 996
- DE-U- 29 708 978
- US-A- 5 105 414

## Beschreibung

Die Erfindung betrifft eine Schublade für ein CD- und oder DVD Laufwerk und ein Hilfsmittel zur Benützung der Schublade nach dem Oberbegriff des unabhängigen Patentanspruches.

Uebliche CD Laufwerke zum Lesen und Bearbeiten von Daten-, Audio- und Video-Compact Disks weisen eine Schublade zum Einlegen von CDs auf. Diese Schublade hat meistens einen Schubladenboden mit rechteckigem Grundriss. Die Schublade ist ins Laufwerk in eine Schubladenaufnahme einschiebbar. Der Schubladenboden ist mit einer schlitzförmigen Aussparung versehen, in deren Bereich sich während des Betriebes der Antriebsteller mit dem Zentrierdorn drehen und die Lesevorrichtung sich bewegen kann. Der Schubladenboden weist eine erste kreisförmige Vertiefung mit einem Durchmesser auf, welcher dem genormten Durchmesser der üblichen CDs entspricht. Diese kreisförmige Vertiefung bildet eine Aufnahmezentrierung zum Einlegen einer CD. Wenn die CD eingelegt ist, wird die Schublade ins Laufwerk eingefahren, worauf der Antriebsteller mit dem Zentrierdom von unten in die zentrale Oeffnung der CD einfährt. Innerhalb der ersten kreisförmigen Zentrierung befindet sich eine zweite kreisförmige Vertiefung mit einem kleineren Durchmesser, welcher der Mini-CD Norm entspricht. In diese zweite kreisförmige Vertiefung kann eine Mini-CD eingelegt werden bevor die Schublade ins Laufwerk eingefahren wird. Diese Vertiefungen bilden je einen umlaufenden Absatz, an welchem die CD beim Einlegen zum Anliegen kommt. Dadurch ist die CD in der Schublade vorzentriert, so dass sie sich beim Einfahren in das Laufwerk nicht verschieben kann und vom Zentrierdom und dem Antriebsteller richtig erfasst werden kann. Mit diesen Laufwerken kann man alle normalen CDs und allenfalls DVDs verwenden. Ebenso ist es möglich, sogenannte shaped CDs, also Compact Discs mit spezieller Form, abzuspieten, sofern diese mit mindestens äusseren drei Ecken an den erwähnten Absätzen zum Anliegen kommen und somit vorzentriert eingelegt werden können. Es gibt auch solche Laufwerkschubladen, welche nur den ersten Positionierabsatz, nicht aber den zweiten Positionierabsatz für Mini-CDs aufweisen. Diese haben daher eine annähernd durchgehende erste Auflagefläche für die eingelegte C D.

EP-A-0'576'253 als nächstliegender Stand der Technik zeigt ein CD-Laufwerk mit einer Laufwerkschublade, welch für normale und für Mini-CDs geeignet ist. Zusätzlich ist ein annähernd quadratischer Halterahmen für kleine optische Disketten vorhanden, welche einen kleineren Durchmesser als die Mini-CD aufweisen und in einem geschlossenen Gehäuse, einer Kassette gelagert sind. Der Halterahmen für die optischen Diskette ist so ausgestaltet, dass er das Gehäuse der Diskette festklammert während dem Betrieb. Ein Benützen von CD in einem Format, welche in der flächigen Ausdehnung zwischen den normalen CD und den Mini-CD liegen, wie beispielsweise die Visitenkarten-CD, ist nicht möglich. Die Ansprüche wurden gegen dieses Dokument abgegrenzt.

EP-A-0'927'996 zeigt eine Schublade für ein CD-Laufwerk mit einem Positionierabsatz für normale und Mini-CDs. Aus EP A 0 927 996 ist ein Antriebsgerät für optische Speicherplatten bekannt. bei welchem die Aufnahme für normale CD und für Mini-CDs ergänzt ist mit einer Aufnahme für rechteckige, nicht zur Rotation vorgesehene, Speicherkarten. Dazupassende Speicherkarten werden hier ortsfest eingelegt. Die Leseeinheit des Antriebsgerätes kann dabei nur eine lineare Spur abtasten. Der Rahmen ist so angeordnet, dass ein eingelegter optischer Datenträger nicht vom Zentrierdom erfasst werden kann.

DE-U-297 08 978 zeigt einen Adapter zum Einlegen in eine CD Laufwerkschublade. Es handelt sich um einen Ring mit einem Aussendurchmesser, welche der Aussendurchmesser eine normale CD entspricht und einem Innendurchmesser, welcher grösser ist, als der Aussendurchmesser einer Mini-CD. Mit einer solchen Schablone können rechteckige CDs benützt werden, sofern deren Diagonale dem Innendurchmesser des Schablonenringes entsprechen oder wenn sie mit mindestens drei regelmässig angeordneten peripheren Kanten daran zum anliegen kommen. Für die Benützung von normale CDs muss aber die Schablone jedesmal wieder entfernt werden.

US-A-5'105'414 ist eine Laufwerkschublade bekannt, welche drei konzentrische kreisförmige Positionierabsätze aufweist. Sie sind für Normale DC, Mini-CDs und solche mit noch kleinerem Durchmesser geeignet. Der Antrieb mit Antriebsteller und Zentierdom sind oben angeordnet. Ein höhenverstellbarer Andrückmechanismus erfass und zentriert die Cd von unten, hebt sie an und presst sie gegen den Antriebsteller.

Aus EP-A-0'375'988 ist eine Laufwerkschubalde bekannt, welche innerhab der Auflagefläche für die normalen CD eine absenkbare Auflage für Mini-CDs aufweist. Die absenkbare Auflage weist Stützen auf, welche als Anlage für Mini-CDs dienen.

Neuerdings kommen CDs in Sonderformen wie Visitenkarten, Herzen und andere auf den Markt. Diese Sonderformen haben oft ein Format, welches unmöglich macht, dass drei aussenliegende Ecken an einem der Absätze zum Anliegen gebracht werden können. Sie sind meist grösser als der Durchmesser einer Mini-CD und kleiner als der Durchmesser einer normalen CD.

Aufgabe der Erfindung ist es, eine Schublade für ein CD/DVD Laufwerk anzugeben, welche ermöglicht, neben den bekannten üblichen runden CDs auch solche mit Sonderformen vorzentriert einzulegen.

Diese Aufgabe wird durch die in den Patentansprüchen angegebene Erfindung gelöst.

Ein zusätzlicher Vorteil der Erfindung ist, dass gemäss der Erfindung verschiedene Sonderformen - CDs benützbar sind.

Die Erfindung wird nachstehend im Zusammenhang mit den Zeichnungen beschrieben.
Es zeigen:
- Figur 1: Aufsicht auf eine erfindungsgemässe Schublade für ein CD/DVD Laufwerk, zusätzlich geeignet für ein Benützen von Visitenkarten-CDs;
- Figur 2: eine solche Schublade in einer zweiten Variante in geschnittener Ansicht;
- Figur 3: eine Schublade in der zweiten Variante in Aufsicht;
- Figur 4: eine dritte Variante mit erweiterten Möglichkeiten in Aufsicht;
- Figur 5: in geschnittener Ansicht;
- Figur 6: eine geschnittene Ansicht durch eine erfindungsgemässe Laufwerkschublade einer Variante gemäss Figur 7;
- Figur 7: eine Aufsicht auf eine weitere Variante einer Laufwerkschublade
- Figur 8: eine Aufsicht auf eine weitere Variante einer Laufwerkschublade
- Figur 9: eine Aufsicht auf eine weitere Variante einer Laufwerkschublade
- Figur 10: eine schematische Ansicht einer Positionierlehre zur Verwendung mit der erfindungsgemässen Laufwerkschublade,
und
- Figur 11: eine weitere Variante der Positionierlehre.

Eine übliche Laufwerkschublade 1 für ein CD- und oder DVD Laufwerk weist eine erste kreisförmige Auflagefläche 12' auf, welche von einem ersten kreisförmigen Positionierabsatz 12 umfangen ist. Beim Einlegen wird eine normal grosse CD/DVD innerhalb dem ersten Positionierabsatz 12 auf die erste kreisförmige Auflagefläche 12' ein- und aufgelegt. Sie liegt somit mit minimalem Spiel an diesem ersten Positionierabsatz 12 an und ist dadurch vorzentriert. Beim Einschieben der Schublade ins Laufwerk kann sie sich nicht verschieben und die Aufnahme auf dem Antriebsteller 14 ist sicher garantiert. Sobald die Laufwerkschublade eingefahren ist, wird der Antriebsdom 15 mit dem Antriebsteller 14 in Arbeitslage angehoben oder aufwärtsgeschwenkt. Alsdann liegt die CD/DVD auf dem Antriebsteller auf und wird durch diesen in Drehung versetzt. Innerhalb der ersten Auflagefläche 12 kann eine kreisförmige, konzentrisch und tiefer liegende zweite Auflagefläche vorhanden sein. Zwischen der ersten Auflagefläche und der zweiten tieferen Auflagefläche befindet sich dann ein zweiter konzentrischer kreisförmiger Positionierabsatz. Dieser dient analog zum Vorzentrieren einer Mini-CD. Von der Laufwerksseite her ist eine Aussparung 10, 11 für den Antriebsteller 14, den Zentrierdom 15 und die Lese-/Schreib- Vorrichtung des Laufwerks vorhanden. Diese durchbricht den kreisförmigen Positionierabsatz 12 einseitig auf dessen Umfang, so dass der Positionierabsatz nicht einen vollständigen Kreis umschreibt. Diese Aussparung muss vorhanden sein, damit die Schublade ungehindert ein- und ausfahren kann.

Der Grundgedanke der Erfindung liegt nun darin, dass weitere Positionierabsätze zum Einlegen von CDs mit besonderen Formen, wie beispielsweise Visitenkarten CDs, angebracht werden können. Diese liegen in ihrer flächigen Ausdehnung innerhalb des Positionierabsatzes 12 auf der Auflagefläche 12'. Sie müssen aber so in die Laufwerkschublade eingelegt werden können, dass sie während dem Einschieben der Schublade nicht verrutschen können und dabei so vorzentriert und gehalten sind, dass der Antriebsdom in die zentrale Antriebsöffnung der DC/DVD einfahren kann.

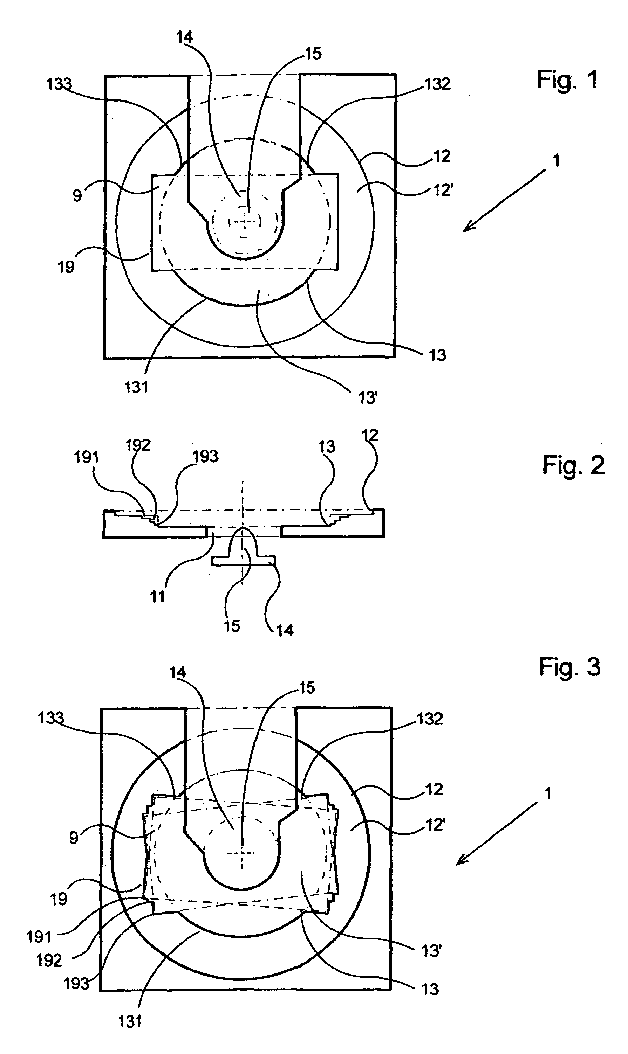

Nach Figur 1 weist eine Schublade 1 für ein CD- und oder DVD Laufwerk eine erste kreisförmige Auflagefläche 12' , welche von einem ersten kreisförmigen Positionierabsatz 12 umfangen ist. Zum Vorzentrieren einer normal grossen CD/DVD wird diese innerhalb dem ersten Positionierabsatz 12 auf die erste kreisförmige Auflagefläche 12' aufgelegt. Sie liegt somit mit minimalem Spiel an diesem ersten Positionierabsatz 12 an. Beim Einschieben der Schublade ins Laufwerk kann sie sich nicht verschieben und die Aufnahme auf dem Antriebsteller 14 ist sicher garantiert. Innerhalb der ersten Auflagefläche 12' befindet sich eine kreisförmige, konzentrisch und tiefer liegende zweite Auflagefläche 13'. Zwischen der ersten Auflagefläche 12' und der zweiten tieferen Auflagefläche 13' befindet sich ein zweiter konzentrischer kreisförmiger Positionierabsatz 13. Dieser dient analog zum Vorzentrieren einer Mini-CD. Von der Laufwerksseite her ist eine Aussparung 11 für den Antriebsteller 14, den Zentrierdorn 15 und die Lese-/Schreib-Vorrichtung des Laufwerks vorhanden. Diese durchbricht beide kreisförmigen Positionierabsätze 12,13 einseitig auf deren Umfang, so dass die Positionierabsätze nicht einen vollständigen Kreis umschreiben. Diese Aussparung muss vorhanden sein, damit die Schublade ungehindert ein- und ausfahren kann.

Der Grundgedanke der Erfindung liegt nun darin, dass der zweite Positionierabsatz 13 anders ausgebildet wird, und zwar so, dass weitere Positionierabsätze 19 für CDs mit besonderen Formen, wie beispielsweise Visitenkarten CDs, angebracht werden können. Diese liegen in Ihrer flächigen Ausdehnung zwischen dem ersten und dem zweiten Positionierabsatz 12,13.

Dazu wird der zweite kreisförmige Positionierabsatz 13 in mindestens zwei, aber. vorzugsweise in drei Absatzsegmente 131, 132, 133 aufgeteilt. Diese drei Absatzsegmente 131, 132, 133 sind voneinander soweit beabstandet, dass eine eingelegte CD dazwischen eindeutig positioniert werden kann. Das heisst, dass der zweite Positionierabsatz 13 eine eingelegte CD nicht mehr annähernd vollständig umfängt. Im Extremfall genügt es sogar, die drei Absatzsegmente 131, 132, 133 durch drei auf einem, die zweite Auflagefläche 13' bildenden Schubladenboden stehende Nocken zu bilden.

In einer einfachsten Version, in der Figur 1 dargestellt, ist ein dritter Positionierabsatz 19 zur Aufnahme von Visitenkarten CDs mit üblicher Grösse für Visitenkarten in der Schublade 1 angebracht. Die zweite Auflagefläche 13' ist nun nicht nur durch die drei Absatzsegmente 131, 132, 133 umrandet, sondern zusätzlich durch je vier Ecken einer rechteckigen Vertiefung, welche in Form und Fläche einer Visitenkarte entspricht. Es ist offensichtlich, dass sich die Absatzsegmente 131, 132, 133 und die Teilelemente des dritten Positionierabsatzes 19 so ergänzen, dass dazwischen eine durchgehende freie zweite Auflagefläche 13' gebildet ist.

In der Figur 3 ist die erste Variante von Figur 1 insoweit erweitert, als die Ausgestaltung und Anordnung des dritten Positionierabsatzes 19 für drei verschiedene Formate von Visitenkarten-CDs vorgesehen ist. Es können somit Visitenkarten-CDs mit verschiedenen Breiten und gleicher Länge verwendet werden. Die kann sich als günstig erweisen, da sich die übliche Grösse der Visitenkarten in verschiedenen Ländern etwas unterscheiden. Gemäss der Darstellung in der Figur 3 ist der dritte Positionierabsatz 19 in einzelne Absatzelemente 191, 192, 193 aufgeteilt. Jedes Absatzelement besteht grundsätzlich aus Absätzen zur Aufnahme der vier Ecken für je eine Grösse von Visitenkarten-CDs. Die vier Absatzelemente 191 für das eine Format sind gegenüber den vier Absatzelementen 192 des zweiten Formates um eine zentrale vertikale Achse um einen bestimmten relativ kleinen Winkel gedreht. Dies gilt ebenso für die vier Absatzelemente 193 für das dritte Format und ebenso allfällige weitere.

Eine weitere Möglichkeit zur Staffelung der Absatzelemente 191, 192, 193 für leicht unterschiedlich dimensionierte, untereinander ähnliche Formate, wie dies beispielsweise bei den CD-Visitenkarten gegeben ist, ist in der Figur 2 in Ansicht eines Querschnittes dargestellt. Hier erfolgt die Staffelung der Absatzelemente 191', 192', 193' nicht durch horizontales gegeneinander Verdrehen der Absatzelemente um eine gemeinsame vertikale Achse, sondern durch vertikale Staffelung. Dabei entsteht wenigsten ansatzweise für jedes Format ein eigene Auflagefläche, respektive mindestens ein Auflagerand.

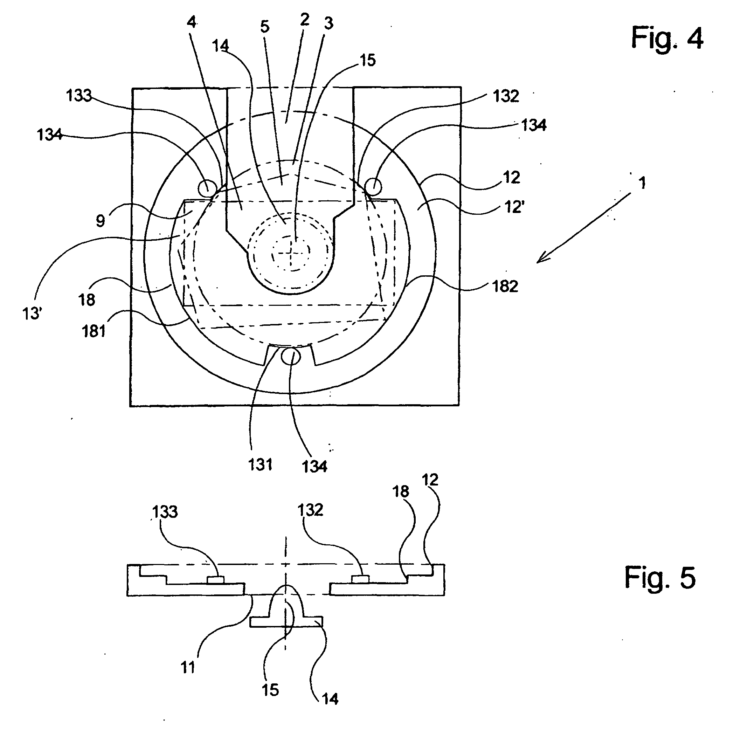

Eine beinahe universelle Möglichkeit ist in der Figur 4 in Aufsicht und in der Figur 5 in Ansicht eines Schnittes dargestellt. Bei dieser Variante bestehen das erste, das zweite und das dritte Absatzsegment 131, 132, 133 zur Aufnahme der Mini-CDs nur noch aus ganz kurzen Stücken. Dafür wird ein vierter Positionierabsatz 18 zusätzlich angeordnet. Er befindet sich, dem Zweck entsprechend, zwischen dem ersten Positionierabsatz 12 und dem zweiten Positionierabsatz 13. Die zweite Auflagefläche 12' erstreckt sich nun in der Fläche eben über den zweiten Positionierabsatz 13 hinaus bis zum vierten Positionierabsatz 18.

In der bevorzugten und hier dargestellten Ausführung besteht der vierte Positionierabsatz 18 aus zwei Absatzelementen 181, 182, welche eigentliche Kreissegmente beschreiben. Zwischen den zwei Absatzelementen 181, 182 befindet sich jeweils eines der Absatzsegmente 131, 132, 133 des zweiten Positionierabsatzes 13. Der Durchmesser des durch die zwei Absatzelemente 181, 182 umschriebenen Kreises entspricht dabei der Diagonale einer üblichen Visitenkarten-CD.

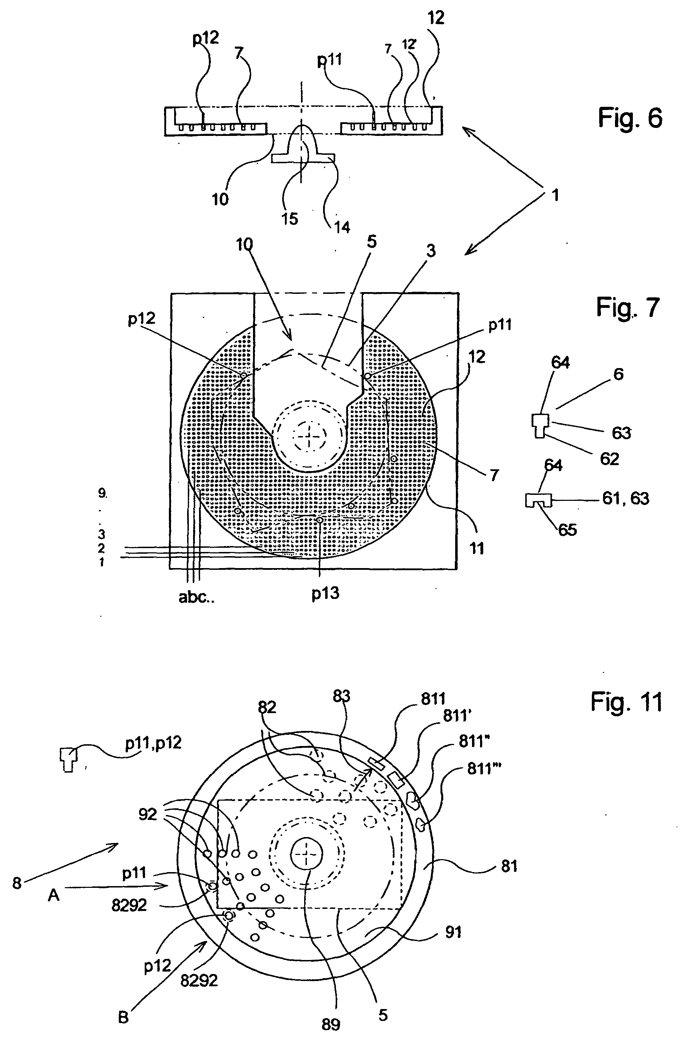

Eine besondere Variante, auf der gleichen Grundidee basierend ist in der Figur 6 im Querschnitt und. in der Figur 7 in Aufsicht dargestellt. Die Absatzsegmente 131, 132, 133 des zweiten Positionierabsatzes 13 sind hier als einfache, auf der zweiten Auflagefläche 13' stehende Nocken 134 ausgeführt. Der Positionierabsatz wird nun durch die radial nach innen weisende Kante der Nocken 134 gebildet. Die Nocken 134 befinden sich also unmittelbar ausserhalb dem jeweiligen Umfang der einzulegenden CD respektive der Absatzkante, die sie bilden. Einer Mini-CD kommt beim Einlegen nun einfach zwischen die Nocken 134 zu liegen.

Diese Ausführungsform ermöglicht ein Vorpositionieren nicht nur von normalen CD/DVD, Mini-CD, Visitenkarten-CD, sondern auch von vielerlei Sonderformen 5, da der frei benützbare Bereich der zweiten Auflagefläche 13' sehr gross ist. Zusätzlich ist eine Kombination von dieser bevorzugten Variante mit abgestuften Positionierabsätzen gemäss der Figur 2 möglich.

Die Basis dieser Variante stellt eine Schublade für CDs oder DVDs dar, welche nur einen ersten Positionierabsatz 11 und die erste Auflagefläche 12 aufweist. Die erste Auflagefläche 12 ist mit einer Vielzahl von regelmässig oder unregelmässig angeordneten Stiftaufnahmen 7 versehen. Die Stiftaufnahmen 7 sind entweder als kleine Sacklöcher in die Auflagefläche 12 eingelassen oder als Hattenoppen darauf aufgesetzt. Die für das Einlegen von CD/DVD mit Sonderformen notwendigen Anlegekanten 63 werden durch Positionierstifte 6 erzeugt. Die Stifte 6 können kurze zylindrische Bolzen sein. Die Bolzen können eine Kappe 64 und einen Dorn 62 zum Einstecken in die Sacklöcher aufweisen. Dabei bilden die Seitenkanten der Kappe 64 die Anlegekanten 63. Bei der Lösung mit den Stiftaufnahmen 7 in Form von Haltenoppen, bestehen die Stifte 6 nur aus Kappen 64, welche auf der unteren Seite eine Ausnehmung 65 aufweisen. Sie werden mit der Ausnehmung 65 auf die Noppen gesteckt. Die Positionierstifte 6 sind nun lösbar auf der Auflagefläche 12 angeordnet.

Die entscheidende Flexibilität für die Verwendung von verschiedensten Sonderformen von CDs/DVDs erhält man, indem man eine notwendige Anzahl von Stiften 6 in diejenigen Stiftaufnahmen 7 ein/aufsteckt oder allenfalls aufklebt, so dann die einzulegende CD/DVD tatsächlich zentriert zwischen den Anlegekanten 63 beim Einlegen gehalten ist. Es empfiehlt sich, die Anordnung der Stiftaufnahmen regelmässig auszugestalten und mit beispielsweise aufgedruckten Informationen für die Position zu versehen. Dies kann beispielsweise ähnlich wie bei einem Schachbrett mit je Stiftaufnahme einer Buchstaben/Zahl Kombination (A/1 .. Z/99) geschehen. Einer Sonderform CD/DVD kann dann die Information mitgegeben werden, welche Positionen von Stiftaufnahmen 7 mit Stiften 6 versehen werden sollen. Dadurch kann jedermann die Stifte 6 zum Vorzentrieren für jede Sonderform richtig setzen. Diese Information kann auf der CD/DVD aufgedruckt oder im Umschlag mitgegeben werden. Damit auch die gewöhnlichen Mini-CDs einfach eingelegt werden können, empfiehlt es sich auf der ersten Auflagefläche 12 einen Kreis zu markieren, welcher diesem Umfang entspricht. Es werden dann einfach mindestens drei Stifte 6 in Stiftaufnahmen 7 gerade ausserhalb dieses Kreises eingesetzt.

Bisher war nur von Schubladen zur Aufnahme von CDs oder DVDs die Rede. Neue Generationen von solchen Laufwerken weisen Schubladen mit austauschbaren Schubladen-Böden auf. Es ist offensichtlich, dass auch ein solche einsetzbarer Schubladenboden mit den Stiftaufnahmen 7 versehen werden kann

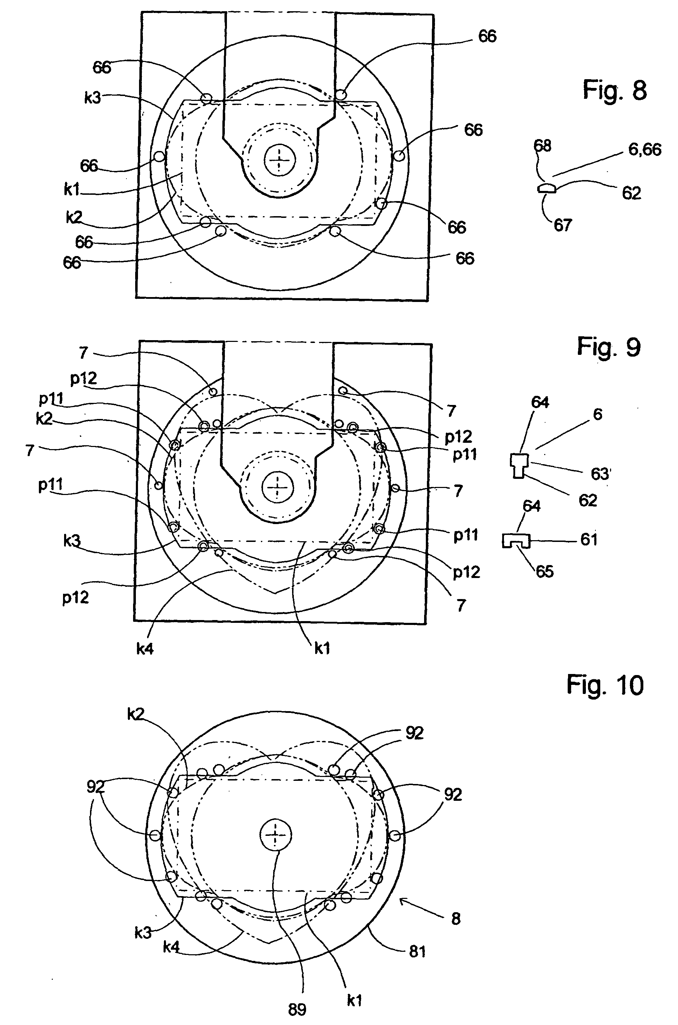

In Figur 8 ist ein Schubladenboden mit respektive die Auflagefläche 12 fest angeordneten Postitionskappen 66 dargestellt. Die Grundlage dieser Ausführung ist die gleiche, wie sie im Zusammenhang mit der Figur 2 beschrieben ist. Für die häufigsten Sonderformen von CDs, DVDs ist je eine Kontourmarkierung k1, k2, k3 sichtbar angeordnet. Die Kontourmarkierungen k1, k2, k3 usw. sind als feine Linien beispielsweise farbig aufgedruckt oder als feine Nuten angebracht. Sie können bereits bei der Herstellung miterzeugt sein. Im Bereich aller wichtigen Kontourmarkierungen sind Postionsstifte 6 in Form von Positionskappen 66 angebracht. Die Positionkappen 66 weisen seitlich ebenfalls Anlageflanken 62 auf Zusätzlich kann auf der Oberseite eine konvex gewölbte Auflagefläche 68 vorhanden sein. Sie sind mit einer flachen unteren Klebefläche 67 versehen, damit sie leicht an den geeigneten Stellen aufgeklebt werden können. Die Position kappen 66 können aber auch bereits bei der Herstellung des Schubladenbodens mit diesem einstückig als Noppen mitgegossen sein. Beim Einlegen wird eine Sonderform CDs, DVDs einfach innerhalb der passenden Kontourmarkierung zwischen die Positionkappen 66 eingelegt, bevor die Schublade in die Arbeitsposition eingefahren wird. CDs, DVDs mit grösserer Grundfläche, wie die üblichen runden, liegen dann einfach auf den konvexen Auflageflächen 67 auf bis die Schublade eingefahren ist. Die konvexen Auflageflächen 67 können dazu beispielsweise mit Teflon beschichtet sein.

Die Ausführungsform nach der Figur 9 ist eine Kombination der Ausführungen von Figur 7 und Figur 8. Auch hier sind die Kontourmarkierungen K1..k4 auf dem Schubladenboden sichtbar angebracht. Im Gegensatz zu vorher beschriebenen Version sind hier eine Anzahl Stiftaufnahmen 7 an allen wichtigen Stellen gemäss den aufgebrachten Kontourmarkierungen vorhanden. Positionierstifte oder Kappen 6 werden für die Sonderform CD wie in der Ausführung nach der Figur 2 auf- oder eingesteckt. Darauf kann die Sonderform CD, DVD eingelegt und anschliessend die Schublade eingefahren werden.

Für den Fachmann ist es ersichtlich, dass die oben beschriebene technische Lehre in Zusammenhang mit kompletten Schubladen sich auch auf auswechselbare Schubladenböden erstreckt und sinngemäss auch für CD/DVD-Wechster angewendet werden kann. Bei Geräten mit CD/DVD-Wechselsystemen empfiehlt es sich, das Laufwerk mit einem Drehpositionsgeber auszurüsten, welcher jederzeit die genaue Drehposition der im Betrieb benützten CD/DVD angibt. Dadurch kann der Antrieb so gesteuert werden, dass der Laufwerkantrieb und damit die CDIDVD bei Beenden der Benützung immer wieder in genau der Drehposition angehalten wird, in der sie eingelegt wurde. Das heisst wenn die CD/DVD eingelegt ist und der Antriebsdom in der Antriebsöffnung der CD/DVD eingefahren ist, wird die Drehposition mit abgelesen und gespeichert. Der Antrieb selbst wird erst dann angefahren. Zum Stoppen wiederum wird der Antrieb abgebremst und angehalten genau in der Drehposition, welche vor dem Anlaufen gespeichert wurde. Dies ermöglicht, dass auch in einem CD/DVD Wechsler Speichermedien mit Sonderformen beliebig einsetzbar sind.

Um diese Laufwerkschublade universell nutzen zu können kann als Zubehör ein Hilfsmittel in Form einer Positionierlehre 8 dienlich sein. Diese ist in der Figur 11 schematisch gezeigt.

Eine einfache Ausführung einer Positionslehre 8 zum Positionieren von Positionierstiften 6 besteht gemäss Figuren 6 und 7 aus einer kreisförmigen Basisscheibe 81, welche einer gewöhnlichen CD/DVD entspricht. Auf dieser sind nun Kontourmarkierungen k1 .. k4, welche den Sonderform-CDs, DVDs entsprechen und diese darstellen, angebracht. Positionierlöcher 92 sind an allen wichtigen Steten knapp ausserhalb der Kontourmarkierungen k1 .. k4 angebracht. Die Basisscheibe kann beispielsweise auch aus Plexiglas durchscheinend sein. Zum Gebrauch wird die Positionlehre 8 in die Laufwerkschublade eingelegt. Sie passt gemau in die Aufnahmestelle für normale CDs. Anschliessend werden Positionierstiffte 6 in die Positionierlöcher 92 gemäss der Kontourmarkierung k1 ..k4 eingesteckt und die Positionierlehre 8 wieder aus dem Laufwerk abgehoben. Die Sonderform CD, DVD kann nun zwischen die Positionierstifte 6 eingelegt werden. Dann wird die Laufwerkschublade eingefahren und die CD, DVD ist betriebsbereit. Beim Wechsel zu einer anderen Sonderform CD, DVD, werden die Positionierstifte 6 einfach wieder herausgezogen.

Eine weitere Variante einer Positionslehre 8 ist aus der Figur 11 ersichtlich. Sie besteht aus einer kreisförmigen Basisscheibe 81, welche einer gewöhnlichen CD/DVD entspricht. Darüber befindet sich konzentrisch eine ebenfalls kreisförmige Einstellscheibe 91. Die Einstellscheibe 91 hat einen etwas kleineren Durchmesser als die Basisscheibe 81. Die Basisscheibe 81 und die Einstellscheibe 91 sind gegeneinander um ein zentrisches Drehlager 89 verdrehbar. Auf der Basisscheibe 81 sind dem Umfang entlang Darstellungen 811, 811', 811", 811''' oder Informationen zu einzelnen Sonderformen von CD/DVDs aufgedruckt.

Die Basisscheibe 81 ist mit einer Matrix von Ausnehmungen 82 auf annähernd der ganzen Fläche, welche durch die Einstellsscheibe 91 abgedeckt ist, versehen. Die Einstellscheibe 91 ist mit einer Matrix von Positionslöchern 92 versehen. Die Anordnung der Positionslöcher 92 zeigt ein etwas anderes Muster als die der Ausnehmungen 82. Die Ausnehmungen 82 können einen etwas grösseren Durchmesser als die Positionslöcher 92 aufweisen. Der Sinn dieser verschiedenen Anordnungen auf der jeweiligen Scheibe 91,81 besteht darin, dass bei jeder Drehstellung der Einstellscheibe 91 gegenüber der Basisscheibe 81 ein Teil der Anzahl der Positionierlöcher 92 sich über Ausnehmungen 82 befindet. Dadurch entstehen an diesen durchgehende Positionierstellen 8292.

Auf der Einstellscheibe ist ein Markierpfeil 83 aufgedruckt. Durch Verdrehen der Einstellscheibe 91 gegenüber der Basisscheibe 81 wird der Markierpfeil 83 auf das gewünschte Signet einer einzulegenden CD/DVD mit Sonderform eingestellt. Bei dieser Einstellung liegen nun eine Anzahl Positionslöcher 92 über Ausnehmungen 82 und geben somit eine Anzahl Positionierstellen 8292 frei. Nun wird die Positionierlehre 8 auf die Auflagefläche 12 der Laufwerkschublade aufgelegt. Dabei befinden sich Stiftaufnahmen p11, p12 genau unter den Positionierstellen 8292. Nun können Positionierstifte oder Positionierkappen 64, 65 durch die Positionierstellen 8292 auf oder in die Stiftaufnahmen p11, p12 gesetzt werden. Die Positionierlehre 8 wird wieder entfernt. Nun kann die CD/DVD mit Sonderform zwichen die gesteckten Positionierstifte 64 oder -Kappen 65 eingelegt werden. Sie wird nun durch die seitlichen Flanken der Postitionierstifte 64 vorzentriert gehalten. Darauf kann die Laufwerkschublade eingefahren werden und der Antriebsteller 14 mit dem Antriebsdom 15 kann in die zentrale Antriebsöffnung der CD/DVD einfahren. Diese ist betriebsbereit. In der Figur 3 sind als Beispiel Positionierstifte p11, p12 im Zusammenhang mit dem Positionieren A,B einer Ecke einer CD/DVD im Format von Visitenkarten 5 dargestellt.

## Patentansprüche

1. Schublade (1) für ein CD- und/oder DVD-Laufwerk, welche zur Verwendung von nicht runden CD/DVDs mit Sonderformen, welche in ihrer flächigen Ausdehnung kleiner als eine normale CD und grösser als eine Mini-CD sind und auf einer ersten kreisförmigen Auflagefläche (12') zum Aufliegen kommen, verwendbar ist, mit einem Schubladenboden mit mindestens einer ersten kreisförmigen Auflagefläche (12') und einem ersten kreisförmigen Positionierabsatz (12) zum vorzentrieren einer CD/DVD, und mit einer Aussparung (11 ) für den Antriebsteller (14), für den Zentrierdom (15) und für die Lese-/Schreib- Vorrichtung des Laufwerks, **dadurch gekennzeichnet, dass** ein dritter Positionierabsatz (18) in Schubladenboden innerhalb der ersten Auflagefläche (12') zum Vorzentrieren einer nicht runden CD/DVD mit Sonderformen , welche in ihrer flächigen. Ausdehnung kleiner als eine normale CD und grösser als eine Mini-CD ist und auf einer ersten kreisförmigen Auflagefläche (12') zum Aufliegen kommt, vorhanden ist, wobei der dritte Positionierabsatz (18) mindestes drei Anlegekanten (63) für die nicht runde CD/DVD bildet.

2. Schublade nach Anspruch 1, **dadurch gekennzeichnet, dass** der dritte Positionierabsatz (19) durch je vier Ecken mindestens einer rechteckigen Vertiefung gebildet ist, welche in Form und Fläche einer Visitenkarte entspricht.

3. Schublade nach Anspruch 2, **dadurch gekennzeichnet, dass** der dritte Positionierabsatz (19) durch mehrere rechteckige Vertiefungen gebildet ist, welche gegeneinander um eine gemeinsame zentrale Achse verdreht sind, welche mehrere Absatzelemente (191, 192, 193) bilden.

4. Schublade nach Anspruch 2, **dadurch gekennzeichnet, dass** der dritte Positionierabsatz (19) durch mehrere rechteckige Vertiefungen gebildet ist, welche unterschiedlich tief in die erste Auflagefläche eingelassen sind, so dass der dritte Positionierabsatz mehrstufig in mehrere Absatzelemente (191,192,193) gegliedert ist.

5. Schublade nach Anspruch 1, **dadurch gekennzeichnet, dass** die kreisförmige Auflagefläche (12) mit einer Vielzahl von regelmässig oder unregelmässig angeordneten Stiftaufnahmen (7) versehen ist und dass Positionierstifte (6) in oder auf den Stiftaufnahmen (7) positionierbar sind.

6. Schublade nach Anspruch 5, **dadurch gekennzeichnet, dass** die Positionierstifte (6) oder Positionierkappen (66) eine Anlegeflanke (63), zum Anlegen einer CD/DVD mit Sonderform, aufweisen.

7. Schublade nach Anspruch 6, **dadurch gekennzeichnet, dass** eine Mehrzahl in Stiftaufnahmen (7) befestigter Positionierstifte (6) mit ihren Anlegeflanken (63) einen Positionierabsatz zum Einlegen und Vorzentrieren einer CD/DVD mit Sonderform (5) bilden.

8. Schublade nach Anspruch 6, **dadurch gekennzeichnet, dass** die Positionierstifte (6) eine Klebefläche (61) aufweisen mit welcher sie auf die Auflagefläche (12) fest aufktebbar sind.

9. Schublade nach einem der Ansprüche 5 bis 8, **dadurch gekennzeichnet, dass** die Auflagefläche (12) mit den Stiftaufnahmen (7) sich auf einem in der Laufwerkschublade lösbar und austauschbar gehaltenen Schubladenboden befindet.

10. Schublade nach Anspruch 5, **dadurch gekennzeichnet, dass** die Auflagefläche (12) mit Kontourmarkierungen (k1 ... k4) entsprechend den Kontouren von CD/DVD mit Sonderformen versehen ist.

11. Schublade nach Anspruch 10, **dadurch gekennzeichnet, dass** Positionierstifte (6) im Bereich der Kontourmarkierungen (k1...k4) fest oder lösbar auf der Auflagefläche (12) angeordnet sind.

12. Schublade nach Anspruch 10, **dadurch gekennzeichnet, dass** die Postitionierstifte (6) im Bereich der Kontourmarkierungen (k1 .. k4) als Noppen mit der Auflagefläche (12) zusammen einstückig sind.

13. Positionslehre (8) zum Auflegen auf die Auflagefläche (12) einer Schublade (1) , weiche eine Auflagefläche mit einer Vielzahl von regelmässig oder unregelmässig angeordneten Stiftaufnahmen (7) und Positionierstifte (6) nach Anspruch 5 aufweist, zum Bestimmen, Positionieren und Stecken der Positionierstifte (6), **dadurch gekennzeichnet, dass** die Positionstehre (8) eine Basisscheibe (81) umfasst, welche mit Ausnehmungen (82) zum Durchstecken von Positionierstiften versehen ist.

14. Positionslehre (8) nach Anspruch 13, **dadurch gekennzeichnet, dass** die Basisscheibe (81) mit Kontourmarkierungen (k1 ... k4) entsprechend den Konturen von CD/DVD mit Sonderformen versehen ist.

15. Positionslehre (8) nach Anspruch 13, **dadurch gekennzeichnet, dass** die Basisscheibe (81) gegenüber einer Einstellscheibe (91) konzentrisch und verdrehbar ist, wobei die Basisscheibe (81) mit der ersten Anordnung von Ausnehmungen (82) und die Einstellscheibe (91) mit einer zweiten Anordnung von Positionierlöchern (92) versehen ist, wobei die erste und die zweite Anordnung nicht identisch sind.

16. Positionslehre nach Anspruch 13, **dadurch gekennzeichnet, dass** die Basisscheibe (81) einen grösseren Durchmesser aufweist als die Einstellscheibe (91) und dass am Rand der Basisscheibe (81) Informationen über die Sonderformen der CD/DVD aufgedruckt sind und dass die Einstellscheibe (91) mit einer Einstellmarkierung versehen ist.

17. Positionslehre nach Anspruch 13, **dadurch gekennzeichnet, dass** bei jeder Einstellung der Einstellscheibe (91) gegenüber der Basisscheibe (81) sich eine Anzahl von Potitionierlöchern (92) über Ausnehmungen (82) befindet und damit durchgehende Postitionierstellen (8292) vorhanden sind, durch welche Positionierstifte (p11,p12) in die darunterliegende Stiftaufnahme (7) einsteckbar sind.

18. Positionslehre nach Anspruch 17, **dadurch gekennzeichnet, dass** die Ausnehmungen (82) der Basisscheibe (81) einen grösseren Durchmesser aufweisen als die Positionierlöcher (92) der Einstellscheibe (91).

## Claims

1. A tray (1) for a CD or a DVD drive which for use of non-round CD/DVDs with special shapes which in their surface extension are smaller than a normal CD and larger than a mini-CD and come to bear on a first circular rest surface (12'), with a tray base with at least one first circular rest surface (12') and a first circular positioning shoulder (12) for precentering a CD/DVD and with a relief (11) for the drive plate (14), for the centering pin (15) and for the read/write device of the drive, **characterised in that** there is present a third positioning shoulder (18) in the tray base within the first rest surface (12') for precentering a non-round CD/DVD with special shapes which in their surface extension are smaller that a normal CD and larger that a mini-CD and come to bear on a first circular rest surface (12'), wherein the third positioning shoulder (18) forms at least three bearing edges (63) for the non-round CD/DVD.

2. A tray according to claim 1, **characterised in that** the third positioning shoulder (19) is formed by in each case four edges of at least one rectangular deepening which corresponds in shape and surface to a calling card.

3. A tray according to claim 2, **characterised in that** the third positioning shoulder (19) is formed by several rectangular deepenings which are rotated to one another about a common central axis and which form several shoulder elements (191, 192, 193).

4. A tray according to claim 2, **characterised in that** the third positioning shoulder (19) is formed by several rectangular deepenings, which are admitted into the first rest surface at different depths so that the third positioning shoulder is divided multi-stepped into several shoulder elements (191. 192, 193).

5. A tray according to claim 1, **characterised in that** the circular rest surface (12) is provided with a multitude of regularly or irregularly arranged pin receivers (7) and that positioning pins (6) are positionable into or onto the pin receivers (7).

6. A drive tray according to claim 5, **characterised in that** the positioning pins or positioning caps (66) comprise a bearing flank for the bearing of a CD/DVD with a special shape.

7. A drive tray according to claim 6, **characterised in that** a multitude of of positioning pins (6) fastened in pin receivers (7), with their bearing flanks (63) , form a positioning shoulder for loading and precentering a CD/DVD with a special shape (5).

8. A drive tray according to claim 6, **characterised in that** the positioning pins comprise an adhesing surface (61) with which they may be rigidly adhesed onto the rest surface (12).

9. A drive tray according to one of the claims 5 to 8, **characterised in that** the rest surface (12) with the pin receivers (7) is located on a tray base which is releasably and exchangeably held in the drive tray.

10. A drive tray according to claim 5, **characterised in that** the rest surface (12) is provided with contour markings (k1 ... k4) corresponding to the contours of the CD/DVD with special shapes.

11. A drive tray according to claim 10, **characterised in that** positioning pins (6) in the region of the contour markings (k1 ... k4) are rigidly or releasably arranged on the rest surface (12).

12. A drive tray according to claim 10, **characterised in that** the positioning pins in the region of the contour markings (k1 .. k4) are formed as naps together with the rest surface (12) as one piece.

13. A positioning template (8) for applying onto the rest surface (12) of a tray (1) according to claim 5, for determining, positioning and inserting the positioning pins (6), **characterised in that** the positioning template (8) comprises a base disk (81) is provided with recesses (82) for inserting through positioning pins.

14. A positioning template (8) according to claim 13, **characterised in that** the base disk (81) is provided with contour markings (k1 .. k4) corresponding to the contours of CD/DVD with special shapes.

15. A positioning template (8) according to claim 13, **characterised in that** the base disk (81) is concentric and rotatable with respect to the adjusting disk (91 ), wherein the base disk (81) is provided with a first arrangement of recesses (82) and the adjusting disk (91) with a second arrangement of positioning holes (92), wherein the first and the second arrangement are not identical.

16. A positioning template according to claim 13, **characterised in that** the base disk (81) has a larger diameter than the adjusting disk (91) and that on the edge of the base disk (81) there is printed information on the special shapes of the CD/DVD and wherein the adjusting disk (91) is provided with an adjusting marking.

17. A positioning template according to claim 13, **characterised in that** with each adjustment of the adjusting disk (91) with respect to the base disk (81) a number of positioning holes (92) is located over recesses (82) and thus continuous positioning locations (8292) are present through which positioning pins (p11, p12) may be inserted into the pin receiver (7) lying thereunder.

18. A positioning template according to claim 17, **characterised in that** the recesses (82) of the base disk (81) have a larger diameter than the positioning holes (92) of the adjusting disk (91).

## Revendications

1. Tiroir (1) pour un lecteur de CD ou de DVD, lequel est utilisable pour l'emploi de CD/DVD qui ne sont pas ronds et qui présentent des formes spéciales, lesquels sont dans leur dimension étendue plus petits qu'un CD normal et plus grands qu'un mini CD et ils viennent s'appuyer à une première surface d'appui circulaire (12'), avec un fond de tiroir avec au moins une première surface d'appui circulaire (12') et un premier palier de positionnement circulaire (12) pour le précentrage d'un CD/DVD et avec un creux (11) pour le disque moteur (14), pour le mandrin de serrage (15) et pour le dispositif de lecture et d'écriture du lecteur de disquettes, **caractérisé par le fait qu'**un troisième palier de positionnement (18) est disponible dans le fond du tiroir à l'intérieur de la première surface d'appui (12') pour le précentrage d'un CD/DVD qui n'est pas rond et qui présente des formes spéciales, lequel est dans sa dimension étendue plus petit qu'un CD normal et plus grand qu'un mini CD et qui vient s'appuyer à une première surface d'appui circulaire (12'), auquel cas le troisième palier de positionnement (18) forme au moins trois bords de guidage (63) pour le CD/DVD qui n'est pas rond.

2. Tiroir selon la revendication 1, **caractérisé par le fait que** le troisième palier de positionnement (19) est formé par au moins quatre angles d'une cavité rectangulaire, laquelle correspond à la forme et à la surface d'une carte de visite.

3. Tiroir selon la revendication 2, **caractérisé par le fait que** le troisième palier de positionnement (19) est formé par plusieurs cavités rectangulaires, lesquelles sont tordues les unes contre les autres autour d'un axe central et commun et lesquelles forment plusieurs éléments de palier (191, 192, 193).

4. Tiroir selon la revendication 2, **caractérisé par le fait que** le troisième palier de positionnement (19) est formé par plusieurs cavités rectangulaires, lesquelles sont encastrées à différentes profondeurs dans la première surface d'appui, de façon à ce que le troisième palier de positionnement soit divisé en plusieurs gradins dans plusieurs éléments de palier (191,192,193).

5. Tiroir selon la revendication 1, **caractérisé par le fait que** la surface d'appui circulaire (12) est pourvue d'une multitude de cavités pour chevilles (7) disposées d'une façon régulière ou irrégulière et que des chevilles de positionnement (6) peuvent être positionnées dans ou sur les cavités pour chevilles (7).

6. Tiroir selon la revendication 5, **caractérisé par le fait que** les chevilles de positionnement (6) ou pointes de positionnement (66) présentent un flanc de support (63) pour l'étalement d'un CD/DVD avec forme spéciale.

7. Tiroir selon la revendication 6, **caractérisé par le fait qu'**une majorité de chevilles de positionnement (6) fixées dans les cavités pour chevilles (7) forment avec leur flanc de support (63) un palier de positionnement pour l'introduction et le précentrage d'un CD/DVD avec forme spéciale (5).

8. Tiroir selon la revendication 6, **caractérisé par le fait que** les chevilles de positionnement (6) présentent une surface adhésive (61) avec laquelle elles peuvent être solidement collées sur la surface d'appui (12).

9. Tiroir selon une des revendications de 5 à 8, **caractérisée par** le fait la surface d'appui (12) avec les cavités pour chevilles (7) se trouve sur un fond de tiroir amovible et remplaçable maintenu dans le tiroir de lecteur de disquettes.

10. Tiroir selon la revendication 5, **caractérisé par le fait que** la surface d'appui (12) est pourvue de marques de contour (k1... k4) correspondant aux contours des CD/DVD avec formes spéciales.

11. Tiroir selon la revendication 10, **caractérisé par le fait que** les chevilles de positionnement (6) sont disposées d'une façon inamovible ou amovible sur la surface d'appui (12) dans le champ des marques de contour (k1 ... k4).

12. Tiroir selon la revendication 10, **caractérisé par le fait que** les chevilles de positionnement (6) constituent une seule unité ensemble avec la surface d'appui (12) en tant que nopes dans le champ des marques de contour (k1... k4).

13. Module de positionnement (8) pour l'application d'un tiroir (1) sur la surface d'appui (12), lequel présente une surface d'appui avec une multitude de cavités pour chevilles (7) et de chevilles de positionnement (6) disposées d'une façon régulière ou irrégulière selon la revendication 5, pour la détermination, le positionnement et l'introduction de chevilles de positionnement (6), **caractérisé par le fait que** le module de positionnement (8) comprend un disque de base (81 ), lequel est pourvu de creux (82) pour faire passer à travers les chevilles de positionnement.

14. Module de positionnement (8) selon la revendication 13, **caractérisé par le fait que** le disque de base (81) est pourvu de marques de contour (k1 ... k4) correspondant aux contours de CD/DVD avec formes spéciales.

15. Module de positionnement (8) selon la revendication 13, **caractérisé par le fait que** le disque de base (81) est concentrique et peut être tordu par rapport au disque de réglage (91), auquel cas le disque de base (81) est pourvu d'une première disposition de creux (82) et le disque de réglage (91 ) est pourvu d'une deuxième disposition de trous de positionnement (92), auquel cas la première et deuxième disposition ne sont pas identiques.

16. Module de positionnement (8) selon la revendication 13, **caractérisé par le fait que** le disque de base (81) présente un diamètre plus grand que le disque de réglage (91) et que des informations sur les formes spéciales du CD/DVD sont imprimées au bord du disque de base (81) et que le disque de réglage (91) est pourvu d'une marque de réglage.

17. Module de positionnement (8) selon la revendication 13, **caractérisé par le fait que** lors de chaque réglage du disque de réglage (91) par rapport au disque de base (81), un nombre de trous de positionnement (92) se trouvent au-dessus des creux (82) et avec cela des lieux de positionnement (82, 92) directs sont disponibles, à travers lesquels des chevilles de positionnement (p11, p12) peuvent être introduites dans les cavités pour chevilles (7) sous-jacentes.

18. Module de positionnement (8) selon la revendication 17, **caractérisé par le fait que** les creux (82) du disque de base (81) présentent un diamètre plus grand que les trous de positionnement (92) du disque de réglage (91).
